# EUROPÄISCHE PATENTANMELDUNG

(11) **EP 2 813 441 A1**
(43) Veröffentlichungstag der Anmeldung: **17.12.2014**
(21) Anmeldenummer: 13171450.3
(22) Anmeldetag: 11.06.2013
(51) Int. Cl.: B65D 65/40, B65D 75/58, B32B 27/32, B65D 77/20

(54) **Folienaufreißverpackung sowie Verwendung einer flexiblen, zumindest dreischichtigen Coextrusionsfolie zur Herstellung einer Folienaufreißverpackung**

(71) Anmelder: Mondi Consumer Packaging Technologies GmbH, 48599 Gronau (DE)
(72) Erfinder: Perick, Matthias, 48683 Ahaus-Altstätte (DE); Siewert, Dana, 48599 Gronau (DE)
(74) Vertreter: Albrecht, Rainer Harald

(57) **Zusammenfassung**

Die Erfindung betrifft eine Folienaufreißverpackung mit einem ersten Folienabschnitt (1) aus einer flexiblen Coextrusionsfolie (3) und einem zweiten Folienabschnitt (2, 2'), wobei der erste Folienabschnitt (1) einen zumindest dreischichtig coextrudierten Aufbau mit einer Kernschicht (5) aus einem Material ohne Permanentklebstoffeigenschaften zwischen einer Siegelschicht (4) und einer Außen- oder Kaschierschicht (6) aufweist. Der erste Folienabschnitt (1) ist mit seiner Siegelschicht (4) entlang einer Siegelnaht (8) mit dem zweiten Folienabschnitt (2, 2') auftrennbar verbunden. Erfindungsgemäß ist die Kernschicht (5) aufgeschäumt, wobei die Festigkeit der Siegelnaht (8) und die Verbundfestigkeit der Schichten der Coextrusionsfolie (3) derart eingestellt sind, dass bei einem Trennen der Folienabschnitte (1, 2, 2') die Siegelschicht (4) seitlich der Siegelnaht (8) aufbricht und dass innerhalb der Kernschicht (5) und/oder an einer Grenzfläche der Kernschicht (5) eine Schichttrennung erfolgt.

## Beschreibung

Die vorliegende Erfindung betrifft eine Folienaufreißverpackung mit einem ersten Folienabschnitt aus einer flexiblen Coextrusionsfolie und einem zweiten Folienabschnitt, wobei der erste Folienabschnitt einen zumindest zweischichtig coextrudierten Aufbau mit einer ersten Schicht aus einem Material ohne Permanentklebstoffeigenschaften und eine Außen- oder Kaschierschicht aufweist, und wobei der erste Folienabschnitt entlang einer Siegelnaht mit dem zweiten Folienabschnitt auftrennbar verbunden ist.

Die Erfindung betrifft damit eine einfache Folienaufreißverpackung, die bei einem erstmaligen Gebrauch durch ein einfaches Auseinanderziehen der beiden Folienabschnitte, beispielsweise einer Vorderwand und einer Rückwand, ohne weitere Hilfsmittel und ohne das Abtrennen eines Kopfes, einer Ecke oder dergleichen geöffnet werden kann. Zumindest die den ersten Folienabschnitt bildende Coextrusionsfolie ist nicht zur Bereitstellung einer Wiederverschlussfunktion durch Klebstoff oder dergleichen vorgesehen. Die Anordnung zusätzlicher Einrichtungen in Form eines Zipper- oder Slider-Verschlusses ist nicht grundsätzlich ausgeschlossen. Die vorliegende Erfindung bezieht sich aber insbesondere auf einfache, kostengünstige Folienaufreißverpackungen, die keine Wiederverschlusseigenschaften aufweisen.

Bei der Folienaufreißverpackung kann es sich insbesondere um eine Schalenverpackung mit einer Deckelfolie oder auch um eine Beutelverpackung handeln. Entsprechende Schalenverpackungen werden beispielsweise für verpackte Lebensmittel wie Fleisch, Wurst, Käse oder dergleichen eingesetzt. Auch Beutelverpackungen werden vorzugsweise für Lebensmittel wie beispielsweise Kartoffelchips eingesetzt. Im Gegensatz zu Aufreißverpackungen, bei denen ein Abschnitt abgetrennt wird, ergibt sich der Vorteil, dass keine separat zu entsorgenden Elemente erzeugt werden, wobei die Folienaufreißverpackung nach dem Öffnen auch in etwa ihre Form behält.

Gattungsgemäße Folienaufreißverpackungen sind aus der Praxis bekannt. Um eine leichte Handhabung einer solchen Folienaufreißverpackung zu ermöglichen, soll das Öffnen einerseits mit einer möglichst niedrigen Öffnungskraft möglich sein, wobei aber auch eine versehentliche Trennung der an der Siegelnaht aufeinander liegenden Folienabschnitte zu vermeiden ist. Darüber hinaus müssen die beiden Folienabschnitte auch so miteinander versiegelt sein, dass bei der Herstellung der Folienaufreißverpackung ein zuverlässiger, möglichst dichter Verschluss gewährleistet ist. Schließlich handelt es sich bei Folienaufreißverpackungen um Einweg-Verpackungen, so dass möglichst niedrige Produktionskosten angestrebt werden, weshalb bevorzugt einfache Kunststoffe wie Polyolefine eingesetzt werden sollen.

Bei den bekannten Folienaufreißverpackungen ohne Wiederverschlusseigenschaften gibt es unterschiedliche Arten der Trennung der miteinander verbundenen Folienabschnitte an der Siegelnaht bei einem Aufreißen. Das Auftrennen wird gemäß der englischen Bezeichnung auch als Aufpeelen bezeichnet, wobei zu einem Auftrennen geeignete Folien auch als Peelfolien bezeichnet werden.

Zunächst ist es möglich, dass eine Siegelschicht eingesetzt wird, die bei einer Zugbelastung innerhalb der Siegelschicht eine Schichtrennung bewirkt. Eine solche Trennung wird auch als Kohäsionsbruch bzw. Kohäsionspeel bezeichnet. Um einen solchen Kohäsionsbruch bei nicht zu hohen Zugkräften zu ermöglichen, kann die Siegelschicht auf der Basis von Polyethylen eine Beimischung von Polybutylen aufweisen. Auch kann ein Zusatzstoff beigegeben werden, der mit der Grundsubstanz der Siegelschicht nicht mischbar ist, um so die Festigkeit der Siegelschicht selbst reduziert.

Als Alternative kann vorgesehen sein, dass direkt die Siegelnaht wieder aufgetrennt wird, wobei also die miteinander verbundenen Folienabschnitte vollständig voneinander getrennt werden. Die Grenzfläche zwischen den miteinander versiegelten Schichten ist dann auch gleichzeitig die Trennebene, so dass sich ein Adhäsionsbruch bzw. ein Adhäsionspeel ergibt. Ein Adhäsionsbruch ist durch den Einsatz von Polymeren steuerbar, die nur eine begrenzte Haftung zueinander aufweisen, wozu beispielsweise Copolymere eingesetzt werden können. Nachteilig kann aber sein, dass beim Versiegeln nicht unter allen Umständen ein sicherer Verschluss gewährleistet werden kann, wobei auch die Materialauswahl stark eingeschränkt ist.

Bei einer Variante des Adhäsionsbruchs erfolgt eine Schichttrennung nicht direkt an den miteinander versiegelten Schichten, sondern zwischen einer der Siegelschichten und einer daran anschließenden, ausgehend von der Siegelnaht verdeckten Schicht, wozu die Siegelschicht an beiden Seiten der Siegelnaht senkrecht zur Folienebene durchrissen werden muss. Eine solche Auftrennung wird auch als Risspeel bezeichnet.

Bezüglich der Bezeichnung von unterschiedlichen Bruchbildern wird auf die DIN EN ISO 10365 verwiesen.

Bei wiederverschließbaren Folienaufreißverpackungen, die in ihrer Herstellung vergleichsweise teuer und aufwendig sind, ist es aus der EP 0 978 460 B1 bekannt, eine Kernschicht aus Permanentklebstoff hinter einer außen liegenden Siegelschicht einzusetzen, wobei dann bei einem Aufreißen die Siegelschicht senkrecht zu ihrer flächigen Erstreckung seitlich einer Siegelnaht aufbricht, um den Permanentklebstoff in der Kernschicht freizulegen. Bezüglich der Kernschicht kann es dann entweder zu einem Kohäsionsbruch oder einem Adhäsionsbruch kommen. Derartige wiederverschließbare Verpackungen sind auch aus der FR 2 686 578 A1 bekannt.

Die JP 2002-154555 A offenbart eine Folienaufreißverpackung, bei der eine nicht orientierte Siegelschicht mit einer aufgeschäumten orientierten Folienschicht kaschiert ist. Zwischen der aufgeschäumten orientierten Schicht und der nicht orientierten Siegelschicht ist eine Metallisierung aus Aluminium vorgesehen, um gegenüber der angrenzenden geschäumten Folienschicht einen Adhäsionsbruch bei einem Öffnen zu erreichen. Aufgrund der Metallisierung und der unterschiedlichen Orientierung der miteinander verbundenen Schichten ist ein aufwendiges Herstellungsverfahren notwendig. Einfache Coextrusionsfolien sind nicht einsetzbar.

Die EP 0 626 255 B1 betrifft ein bahnförmiges Laminat aus thermoplastischem Schaumstoff sowie einen daraus hergestellten Formkörper. Es soll beispielsweise eine nicht flexible aufgeschäumte Schale bereitgestellt werden, die nachfolgend vollständig von einer angrenzenden Folie getrennt werden kann, um eine separate Entsorgung zu ermöglichen.

Der vorliegenden Erfindung liegt die Aufgabe zugrunde, eine Folienaufreißverpackung mit den eingangs beschriebenen Merkmalen anzugeben, die möglichst einfach ausgestaltet ist und sich durch gute Aufreißeigenschaften auszeichnet.

Gegenstand der Erfindung und Lösung der Aufgabe ist eine Folienaufreißverpackung gemäß Patentanspruch 1 bzw. 4. Ausgehend von einer gattungsgemäßen Ausgestaltung ist die Folienaufreißverpackung dadurch gekennzeichnet, dass die Kernschicht bzw. erste Schicht aufgeschäumt ist, wobei die Festigkeit der Siegelnaht und die Verbundfestigkeit der Schichten der Coextrusionsfolie bei einem zumindest dreischichtigen Aufbau der Coextrusionsfolie mit der Kernschicht zwischen der Siegelschicht (4) und der Außen-oder Kaschierschicht derart eingestellt sind, dass bei einem Trennen der Folienabschnitte die Siegelschicht seitlich der Siegelnaht, also insbesondere an zumindest einem Rand bzw. einer Kante der Siegelnaht aufbricht und dass innerhalb der Kernschicht und/oder an einer Grenzfläche der Kernschicht eine Schichtrennung erfolgt. Wenn sich die Siegelnaht nicht unmittelbar bis zu einem Rand der Folienaufreißverpackung erstreckt, bricht die Siegelschicht an beiden Seiten der Siegelnaht auf und zwar im Wesentlichen senkrecht zu der flächigen Erstreckung der Coextrusionsfolie.

Wenn gemäß einer alternativen Lösung die Coextrusionsfolie zumindest zweischichtig ausgebildet ist und die erste Schicht der Coextrusionsfolie direkt mit dem zweiten Folienabschnitt versiegelt ist, ist erfindungsgemäß vorgesehen, dass die erste Schicht aufgeschäumt ist, wobei die Festigkeit der Siegelnaht und die Verbundfestigkeit der Schichten der Coextrusionsfolie derart eingestellt sind, dass bei einem Trennen der Folienabschnitte an der Siegelnaht innerhalb der ersten Schicht oder an einer Grenzfläche der ersten Schicht zu der Außen-oder Kaschierschicht eine Schichttrennung erfolgt. Wenn die Schichttrennung an der Grenzfläche zu der Außen- oder Kaschierschicht erfolgt, reißt die aufgeschäumte erste Schicht bis zu dieser Grenzfläche auf. Eine Trennung direkt an dem durch die Siegelnaht verschmolzenen Material erfolgt in der Regel nicht, wobei auch dann die Schwächung durch das Aufschäumen keine Wirkung zeigen würde.

Erfindungsgemäß wird bei der Kernschicht bzw. der ersten Schicht sowohl die interne Festigkeit als auch die Verbundfestigkeit gegenüber den angrenzenden Schichten reduziert. Diese Reduzierung erfolgt erfindungsgemäß durch das Auschäumen, so dass ein Zusatz weiterer Rohstoffe vermieden werden kann, was aus mehreren Gründen vorteilhaft ist. Zunächst kann die Folienaufreißverpackung vollständig oder zumindest weitgehend aus Polyolefin, insbesondere Polyethylen gefertigt werden, wobei dann die Folienaufreißverpackung als Ganzes gut recycelt werden kann. Auch hinsichtlich der Verarbeitung und der Kosten ist ein Verzicht auf weitere Rohstoffe von Vorteil. Lediglich der Extruder zur Herstellung der Coextrusionsfolie muss so eingerichtet sein, dass die Kernschicht aufgeschäumt werden kann. Ansonsten können einfache handelsübliche Rohstoffe eingesetzt werden.

Von Vorteil ist auch, dass durch den Grad der Aufschäumung sowie die Auswahl der Materialien für die verschiedenen Schichten die zum Aufreißen notwendige Kraft, die auch als Peelkraft bezeichnet wird, genau eingestellt werden kann.

Erfindungsgemäß erfolgt eine Schichtrennung nicht direkt an der Grenzfläche der miteinander verbundenen Folienabschnitte, so dass dort eine hohe Festigkeit und damit eine sichere Verbindung durch die Siegelnaht ermöglicht wird.

Bei einem zumindest dreischichtigen Aufbau der Coextrusionsfolie ist die Siegelschicht aber zweckmäßigerweise möglichst spröde, damit diese beim Aufreißen leicht bis zu der darunter angeordneten aufgeschäumten Kernschicht reißen kann.

Erfindungsgemäß besteht der erste Folienabschnitt aus der beschriebenen zumindest zwei- bzw. dreischichtigen Coextrusionsfolie, wobei der zweite Folienabschnitt von einem anderen Folienmaterial, beispielsweise einer steifen, tief gezogenen Schale, gebildet sein kann. Grundsätzlich ist es aber auch möglich, dass der erste Folienabschnitt und der zweite Folienabschnitt aus der gleichen Coextrusionsfolie gebildet sind. Insbesondere kann die gesamte Aufreißfolienverpackung vollständig auf der beschriebenen Coextrusionsfolie gebildet sein. Hinsichtlich der Siegelnaht ergibt sich dann in beide Richtungen ein übereinstimmender Aufbau, wobei die Trennung innerhalb der Kernschicht bzw. ersten Schicht und/oder an einer Grenzfläche der Kernschicht bzw. ersten Schicht in einem der beiden miteinander verbundenen Folienabschnitte erfolgt.

Die dem zweiten Folienabschnitt gegenüberliegende Schicht der Coextrusionsfolie kann entweder eine Außenschicht oder eine Kaschierschicht bilden. Insbesondere kann eine Außenfolie mit dieser Schicht kaschiert werden, die dann eine Kaschierschicht bildet. Die Außenfolie kann beispielsweise dazu vorgesehen sein, der Folienaufreißverpackung ein hochwertiges Aussehen zu verleihen und eine Bedruckung zu ermöglichen. Geeignet sind beispielsweise Außenfolien aus Polyester, insbesondere Polyethylenterephthalat (PET) oder biaxial orientiertem Polypropylen (BOPP).

Wie bereits zuvor erläutert, ermöglicht das erfindungsgemäß vorgesehene Aufschäumen der Kernschicht bzw. ersten Schicht, dass der Anteil zusätzlicher Beimischungen reduziert wird, wobei auch weitgehend sortenreine Coextrusionsfolien aus Polyolefin, insbesondere Polyethylen, gebildet werden können. Vorzugsweise besteht die Coextrusionsfolie zu zumindest 50 Gew.-% aus Polyolefin, insbesondere Polyethylen.

Insbesondere kann die Außen- oder Kaschierschicht als Hauptbestandteil Polyethylen niedriger Dichte (LDPE) einschließlich linearem Polyethylen niedriger Dichte (LLDPE) enthalten. Besonders bevorzugt ist ein Gemisch aus LLDPE und LDPE, welches beispielsweise ein Mischungsverhältnis von 70:30 aufweisen kann. Grundsätzlich sind aber auch andere Materialien für die Außen-oder Kaschierschicht geeignet.

Vorzugsweise ist auch die Kernschicht bzw. erste Schicht hauptsächlich aus Polyolefin, insbesondere Polyethylen niedriger Dichte gebildet.

Durch das Aufschäumen der Kernschicht bzw. ersten Schicht wird deren Dichte entsprechend dem Grad der Aufschäumung reduziert. Die Dichte der Kernschicht bzw. ersten Schicht beträgt beispielsweise zwischen 0,1 g/cm³ und 0,8 g/cm³, bevorzugt 0,3 g/cm³ und 0,6 g/cm³, besonders bevorzugt zwischen 0,4 g/cm³ und 0,5 g/cm³. Bei den üblichen Materialien und insbesondere dem bevorzugten Polyethylen niedriger Dichte (LDPE) bzw. linearem Polyethylen niedriger Dichte (LLDPE) entspricht dies in etwa einer Halbierung der Dichte und damit einer Verdopplung der Dicke im Vergleich zu einer ungeschäumten Folienschicht.

Besonders gleichmäßige, gute mechanische Eigenschaften werden dann erreicht, wenn die Kernschicht bzw. erste Schicht eine feinzellige Schaumstruktur aufweist, die beispielsweise durch das sogenannte MuCell-Verfahren gebildet werden kann.

Der Schmelze wird dabei während der Extrusion ein Treibmittel beigegeben, welches während der Extrusion bzw. unmittelbar nach dem Austritt aus dem Extrusionsspalt ein Aufschäumen bewirkt. Insbesondere kommt ein physikalisches Aufschäumen in Betracht, bei dem zunächst ein Treibmittel unter Druck der Schmelze beigegeben wird und sich dann bei dem Austritt aus dem Düsenspalt der Coextrusionsdüse entspannt. Als Treibmittel sind insbesondere Stickstoff (N₂) und Kohlendioxid (CO₂) geeignet. Das Treibmittel liegt vor dem Zudosieren als überkritisches Fluid vor, welches die Inkompressibilität einer Flüssigkeit und die Lösungseigenschaften eines Gases vereint. Das Treibmittel geht mit der Polymerschmelze in Lösung und bildet dort verteilt ein Einphasensystem mit der Kunststoffschmelze. Durch einen schnellen Druckabfall beim Austritt aus der Extrusionsdüse bilden sich in der Polymerschmelze Nukleierungskeime. Das Gas löst sich kontrolliert aus der Schmelze heraus, wobei eine sehr feine, gleichmäßige Schaumstruktur gebildet wird. Ein entsprechendes Verfahren wird unter anderem in US 6 051 174 beschrieben.

Um bei dem Aufschäumen eine möglichst gleichmäßige Bildung kleinster Zellen zu ermöglichen, kann die Kernschicht bzw. erste Schicht eine Beimischung aus Partikel enthalten, die bei dem Extrusionsprozess eine Zellenbildung erleichtern und deshalb auch als Nukleierungsmittel bezeichnet werden. Eine solche Beimischung aus Partikeln kann beispielsweise aus Talkum bestehen oder Talkum als Hauptbestandteil aufweisen.

Die Dicke der Kernschicht kann im aufgeschäumten Zustand beispielsweise zwischen 10 µm und 100 µm, vorzugsweise zwischen 50 µm und 70 µm, betragen.

Die Gesamtdicke der Coextrusionsfolie kann zwischen 20 µm und 250 µm, vorzugsweise zwischen 60 µm und 120 µm liegen, wobei die optional vorgesehene Siegelschicht vorzugsweise eine Dicke zwischen 3 µm und 100 µm, besonders bevorzugt zwischen 8 µm und 30 µm, beispielsweise ca. 15 µm aufweisen kann.

Gegenstand der Erfindung ist auch die Verwendung einer flexiblen, zumindest dreischichtigen Coextrusionsfolie mit einer Kernschicht aus einem aufgeschäumten Material ohne Permanentklebstoffeigenschaften zwischen einer Siegelschicht und einer Außen- oder Kaschierschicht zur Herstellung einer Folienaufreißverpackung mit der Maßgabe, dass die Coextrusionsfolie als erster Folienabschnitt mit einem zweiten Folienabschnitt entlang einer Siegelnaht auftrennbar verbunden wird.

Im Zuge der beanspruchten Verwendung ergibt sich dann die zuvor beschriebene Folienaufreißverpackung.

Die Erfindung wird im Folgenden anhand einer lediglich ein Ausführungsbeispiel darstellenden Zeichnung erläutert. Es zeigen:
- Fig. 1: eine Folienaufreißverpackung im geschlossenen Zustand,
- Fig. 2: die Folienaufreißverpackung gemäß der Fig. 1 nach einem Aufreißen,
- Fig. 3: eine alternative Ausgestaltung einer Folienaufreißverpackung im aufgerissenen Zustand,
- Fig. 4: eine alternative Ausgestaltung einer Folienaufreißverpackung im geschlossenen Zustand,
- Fig. 5: ein Abschnitt der Folienaufreißverpackung, der nicht aufreißbar ist.

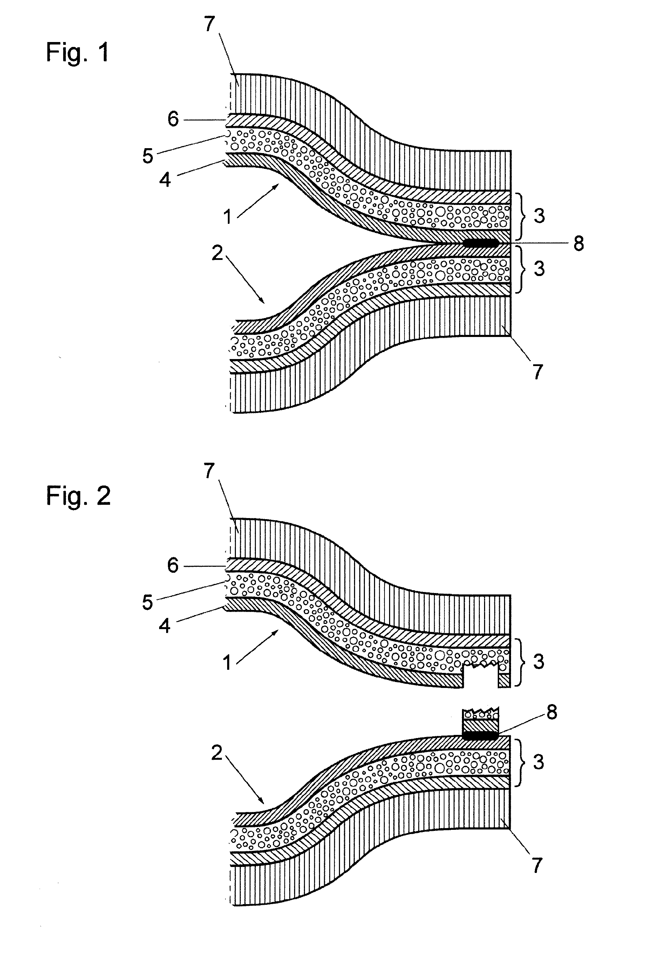

Die Fig. 1 zeigt eine Folienaufreißverpackung ohne Wiederverschlusseigenschaften, die einen ersten Folienabschnitt 1 und einen zweiten Folienabschnitt 2 aus einer flexiblen, dreischichtigen Coextrusionsfolie 3 aufweist. Die Coextrusionsfolie 3 weist bezogen auf die dargestellte Ausführung der Folienaufreißverpackung an der Innenseite eine Siegelschicht 4, eine daran anschließende Kernschicht 5 sowie eine Außen- oder Kaschierschicht 6 auf. An die Außen- oder Kaschierschicht 6 schließt in dem Ausführungsbeispiel eine Außenfolie 7 an, die der Folienaufreißverpackung ein hochwertiges Erscheinungsbild verleiht. Gleichzeitig kann die Außenfolie 7 auch als Druckträger für eine Bedruckung vorgesehen sein. Geeignete Materialien für die Außenfolie 7 sind beispielsweise Polyethylenterephthalat (PET) oder biaxial orientiertes Polypropylen (BOPP).

In der Fig. 1 ist des Weiteren zu erkennen, dass die beiden Siegelschichten 4 des ersten Folienabschnittes 1 und des zweiten Folienabschnittes 2 an einer Siegelnaht 8 miteinander verbunden sind, wodurch die Folienaufreißverpackung verschlossen ist. Die übrigen, nicht dargestellten Ränder der Folienaufreißverpackung können auch mit einer entsprechenden Siegelnaht versehen sein. Zumindest ein Teil der Ränder kann aber auch durch ein Falten der Coextrusionsfolie gebildet sein.

Die Fig. 2 zeigt die Folienaufreißverpackung nach einem Aufreißen, wobei an dem ersten Folienabschnitt 1 die dortige Siegelschicht 4 senkrecht zu der Fläche der Coextrusionsfolie 3 an beiden Seiten der Siegelnaht 8 eingerissen ist und wobei durch die bei dem Aufreißen ausgeübte Kraft die Kernschicht 5 in ihrer Dicke zerrissen ist, so dass ein Kohäsionsbruch der Kernschicht 5 vorliegt. Erfindungsgemäß ist die Kernschicht aufgeschäumt und aus einem Material ohne Permanentklebstoffeigenschaften gebildet. Durch das Aufschäumen wird gezielt die Festigkeit der Kernschicht 5 reduziert, so dass die Kernschicht 5 in der dargestellten Schichtenfolge einschließlich der Siegelnaht 8 die schwächste Stelle bei einem Aufreißen bildet, wodurch der beschriebene Kohäsionsbruch bei einem Aufreißen entsteht.

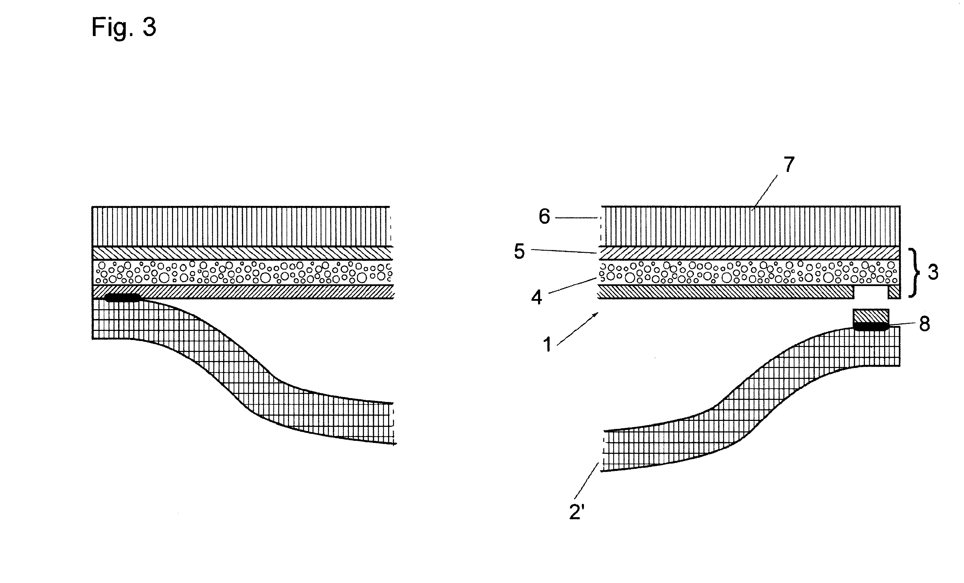

Die Fig. 3 zeigt davon ausgehend eine alternative Ausgestaltung, bei der nur der erste Folienabschnitt 1 von der beschriebenen Coextrusionsfolie 3 gebildet ist. Der zweite Folienabschnitt 2' wird dagegen von einer steifen Schale gebildet, die zumindest in Richtung der Coextrusionsfolie 3 eine heißsiegelbare Oberfläche aufweist.

Als weitere Variante ist in der Fig. 3 dargestellt, dass die Reduzierung der Festigkeit der Kernschicht durch das Aufschäumen auch eine geringere Verbundfestigkeit gegenüber der angrenzenden Siegelschicht 4 bewirkt, so dass alternativ zu dem in Fig. 2 dargestellten Kohäsionsbruch abhängig von den eingesetzten Materialien auch ein Adhäsionsbruch möglich ist.

Erfindungsgemäß kann mit einfachen Mitteln, nämlich lediglich mit einem Aufschäumen der Kernschicht 5, ein leichtes Aufreißen ermöglicht werden. So ist es möglich die, Coextrusionsfolie 3 hauptsächlich oder ausschließlich aus Polyolefin zu fertigen. Die Siegelschicht 4 kann beispielsweise aus Polyethylen, insbesondere Polyethylen niedriger Dichte (LDPE) und/oder linearem Polyethylen niedriger Dichte (LLDPE) bestehen. Um ein leichtes Zerreißen der Siegelschicht 4 in Richtung der darunter angeordneten Kernschicht 5 zu ermöglichen, sind aber insbesondere auch Beimischungen von Polystyrol (PS) oder Polypropylen (PP) zweckmäßig.

Die Kernschicht 5 weist eine feinzellige Schaumstruktur mit Zellen auf, die mit Stickstoff gefüllt sind. Die Dichte der Kernschicht kann beispielsweise zwischen 0,1 g/cm³ und 0,8 g/cm³ betragen, wobei auch zur Verbesserung der Zellenbildung die Beimischung von Partikeln, insbesondere von Talkum zweckmäßig ist. Als polymere Grundsubstanz der Kernschicht ist ein Gemisch von LLDPE und LDPE geeignet.

Eine vergleichbare Mischung ist auch in besonderem Maße für die Außen- oder Kaschierschicht 6 bevorzugt.

Im Rahmen eines konkreten Beispiels wurde eine dreischichtige Coextrusionsfolie 3 mit einer Siegelschicht 4 einer Kernschicht 5 und einer Außen- oder Kaschierschicht gemäß der Tabelle 1 hergestellt. Als Treibmittel wurde Stickstoff bei einem Druck von 250 bar in den Extrusionsprozess in einer solchen Menge zugegeben, dass die Kernschicht 5 gegenüber einer ungeschäumten Schicht aus dem gleichen Material die doppelte Dicke aufweist. Die in der Tabelle 1 angegebene Dichte bezieht sich auf die Einheit g/cm³. Der Massenfluss MFI (auch MFR) wurde gemäß DIN EN ISO 1133 bestimmt.

**Tabelle 1**

| **Siegelschicht (15 µm)** | **Kernschicht (60 µm)** | **Außen-oder Kaschier- shicht (15 µm)** |
|---|---|---|
| 70% LDPE (MFI 2-5; 190°C/2,16 kg) | 60% LDPE (MFI 2-7; 190°C/2,16 kg) | 70% LDPE (MFI 1-2; 190°C/2,16 kg) |
| 30% PS (MFI 15-25; 200°C/5 kg) | 20% Nukleierungsmittel-LDPE-Batch (enthält Talkum) | 30% LDPE (MFI 1-4; 190°C/2,16 kg) |
| | 20% LDPE (MFI 3-9; 190°C/2,16 kg) | |

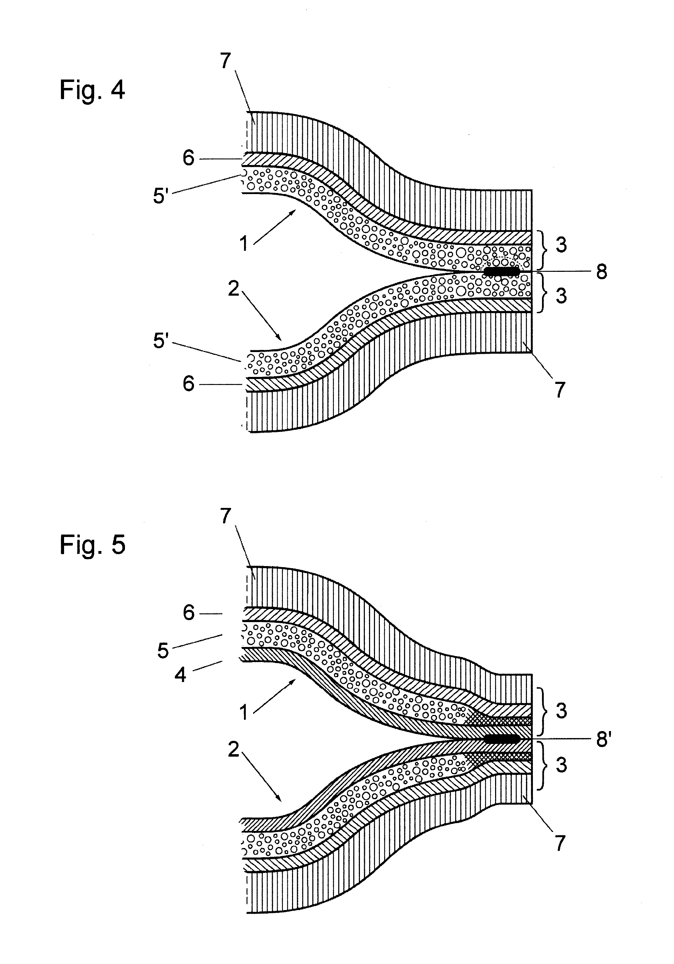

Die Fig. 4 zeigt eine alternative Ausgestaltung der Erfindung, wobei die Coextrusionsfolie 3 lediglich zweischichtig ausgebildet ist. Entsprechend sind der erste Folienabschnitt 1 und der zweite Folienabschnitt 2 an einer ersten Schicht 5' verbunden, die demnach eine außenliegende Schicht und keine Kernschicht bildet. Auch bei einer solchen Ausgestaltung der Verpackung kann das Aufschäumen dazu genutzt werden, um ein leichtes Aufreißen zu ermöglichen. So wird bei einem Aufreißen unmittelbar an der Siegelnaht keine Trennung erfolgen. Ein Aufreißen erfolgt vielmehr wie bei dem Ausführungsbeispiel der Fig. 1 innerhalb der ersten Schicht 5' oder auch zwischen der ersten Schicht 5' und der Kaschierschicht 6.

Bei den dargestellten Ausführungsbeispielen ist die Siegelnaht 8 in einem Abstand zu dem äußeren Rand der Folienaufreißverpackung angeordnet, so dass ein Aufbrechen der Coextrusionsfolie 3 an beiden Seiten bzw. an beiden Rändern der Siegelnaht 8 erfolgt. Selbstverständlich kann die Siegelnaht 8 auch bis zu dem Rand der Folienaufreißverpackung geführt werden, so dass der Riss dann stufenförmig nach außen verläuft.

Häufig wird gewünscht, dass die Folienaufreißverpackung zwar leicht geöffnet werden kann, der erste Folienabschnitt 1 aber nicht vollständig von dem zweiten Folienabschnitt 2 getrennt werden kann. Um dies zu erreichen, können neben der auftrennbaren Verbindung auch zusätzliche, nicht auftrennbare Verbindungen erzeugt werden. Fig. 5 zeigt eine solche nicht auftrennbare Verbindung, wobei bereichsweise eine Siegelnaht 8' unter einen größeren Anpressdruck und/oder einer höheren Siegeltemperatur erzeugt wird. Dadurch wird die Kernschicht 5 komprimiert, wodurch die Schwächung durch das Aufschäumen reduziert ist. Entsprechend ergibt sich durch die zusätzliche, bereichsweise an der Folienaufreißverpackung erzeugte Siegelnaht 8' ein nicht oder zumindest schwer auftrennbarer Bereich.

## Patentansprüche

1. Folienaufreißverpackung mit einem ersten Folienabschnitt (1) aus einer flexiblen Coextrusionsfolie (3) und einem zweiten Folienabschnitt (2, 2'),
wobei der erste Folienabschnitt (1) einen zumindest dreischichtig coextrudierten Aufbau mit einer Kernschicht (5) aus einem Material ohne Permanentklebstoffeigenschaften zwischen einer Siegelschicht (4) und einer Außen- oder Kaschierschicht (6) aufweist und
wobei der erste Folienabschnitt (1) mit der Siegelschicht (4) entlang einer Siegelnaht (8) mit dem zweiten Folienabschnitt (2, 2') auftrennbar verbunden ist,
**dadurch gekennzeichnet, dass** die Kernschicht (5) aufgeschäumt ist, wobei die Festigkeit der Siegelnaht (8) und die Verbundfestigkeit der Schichten der Coextrusionsfolie (3) derart eingestellt sind, dass bei einem Trennen der Folienabschnitte (1,2, 2') die Siegelschicht (4) seitlich der Siegelnaht (8) aufbricht und dass innerhalb der Kernschicht (5) und/oder an einer Grenzfläche der Kernschicht (5) eine Schichttrennung erfolgt.

2. Folienaufreißverpackung nach Anspruch 1, **dadurch gekennzeichnet, dass** die Siegelschicht (4) aus Hauptbestandteil Polyethylen niedriger Dichte enthält.

3. Folienaufreißverpackung nach Anspruch 1 oder 2, **dadurch gekennzeichnet, dass** die Siegelschicht (4) eine Dicke zwischen 3 µm und 100 µm aufweist.

4. Folienaufreißverpackung mit einem ersten Folienabschnitt (1) aus einer flexiblen Coextrusionsfolie (3) und einem zweiten Folienabschnitt (2, 2'),
wobei der erste Folienabschnitt (1) einen zumindest zweischichtig coextrudierten Aufbau mit einer ersten Schicht (5') aus einem Material ohne Permanentklebstoffeigenschaften und eine Außen- oder Kaschierschicht (6) aufweist und
wobei der erste Folienabschnitt (1) mit der ersten Schicht (5') entlang einer Siegelnaht (8) mit dem zweiten Folienabschnitt (2, 2') auftrennbar verbunden ist,
**dadurch gekennzeichnet, dass** die erste Schicht (5) aufgeschäumt ist, wobei die Festigkeit der Siegelnaht (8) und die Verbundfestigkeit der Schichten der Coextrusionsfolie (3) derart eingestellt sind, dass bei einem Trennen der Folienabschnitte (1,2, 2') an der Siegelnaht (8) innerhalb der ersten Schicht (5') oder an einer Grenzfläche der ersten Schicht (5) zu der Außen-oder Kaschierschicht (6) eine Schichttrennung erfolgt.

5. Folienaufreißverpackung nach einem der Ansprüche 1 bis 4, **dadurch gekennzeichnet, dass** der erste Folienabschnitt (1) und der zweite Folienabschnitt (2, 2') aus der gleichen Coextrusionsfolie (3) gebildet sind.

6. Folienaufreißverpackung nach einem der Ansprüche 1 bis 5, **dadurch gekennzeichnet, dass** die Außen- oder Kaschierschicht (6) mit einer Außenfolie (7) kaschiert ist.

7. Folienaufreißverpackung nach einem der Ansprüche 1 bis 6, **dadurch gekennzeichnet, dass** die Coextrusionsfolie (3) zu zumindest 50 Gew.-% aus Polyolefin, insbesondere Polyethylen besteht.

8. Folienaufreißverpackung nach einem der Ansprüche 1 bis 7, **dadurch gekennzeichnet, dass** die Außen- oder Kaschierschicht (6) als Hauptbestandteil Polyethylen niedriger Dichte enthält.

9. Folienaufreißverpackung nach einem der Ansprüche 1 bis 8, **dadurch gekennzeichnet, dass** die Kernschicht (5) bzw. die erste Schicht (5') aus Polyolefin, insbesondere Polyethylen niedriger Dichte, gebildet ist.

10. Folienaufreißverpackung nach einem der Ansprüche 1 bis 9, **dadurch gekennzeichnet, dass** die Dichte der Kernschicht (5) bzw. der ersten Schicht (5') zwischen 0,1 g/cm³ und 0,8 g/cm³ beträgt.

11. Folienaufreißverpackung nach einem der Ansprüche 1 bis 10, **dadurch gekennzeichnet, dass** die Kernschicht (5) bzw. die erste Schicht (5') eine Schaumstruktur mit Zellen aufweist, die mit Stickstoff gefüllt sind.

12. Folienaufreißverpackung nach einem der Ansprüche 1 bis 11, **dadurch gekennzeichnet, dass** die Kernschicht (5) bzw. die erste Schicht (5') zwischen 10 Gew.-% und 30 Gew.-% einer Beimischung aus Partikeln enthält.

13. Folienaufreißverpackung nach einem der Ansprüche 1 bis 12, **dadurch gekennzeichnet, dass** die Coextrusionsfolie (3) eine Dicke zwischen 20 µm und 250 µm aufweist.

14. Verwendung einer flexiblen, zumindest dreischichtigen Coextrusionsfolie (3) mit einer Kernschicht (5) aus einem aufgeschäumten Material ohne Permanentklebstoffeigenschaften zwischen einer Siegelschicht (4) und einer Außen- oder Kaschierschicht (6), zur Herstellung einer Folienaufreißverpackung mit der Maßgabe, dass die Coextrusionsfolie (3) als erster Folienabschnitt (1) mit einem zweiten Folienabschnitt (2, 2') entlang einer Siegelnaht (8) auftrennbar verbunden wird.
